# EUROPEAN PATENT APPLICATION

(11) **EP 2 925 059 A1**
(43) Date of publication of application: **30.09.2015**
(21) Application number: 13869207.4
(22) Date of filing: 12.09.2013
(51) Int. Cl.: H04W 48/16

(54) **TERMINAL AND METHOD THEREOF FOR SEARCHING PASSIVELY ACTIVATED WIFI NETWORK SEARCHING**

(30) Priority: 27.12.2012 CN 201210576746
(71) Applicant: ZTE Corporation, 518057 Shenzhen City, Guangdong Province (CN)
(72) Inventor: WEN, Yuan, Shenzhen Guangdong 518057 (CN)
(74) Representative: Zerbi, Guido Maria
(86) International application number: PCT/CN2013/083396
(87) International publication number: WO 2014/101480

(57) **Abstract**

A terminal and a method for the terminal implementing passively activated WiFi network searching, the method includes: a terminal configured with switch device detecting a received signal, when a WiFi signal is detected, using the switch device to turn on a WiFi module in a function-off state to search for a WiFi network. In the method and terminal described in the embodiments of the present invention, a switch device is configured in the terminal, after the switch device receives a WiFi signal, a WiFi module is turn on immediately to search for a network, it implements a mode for passively activated WiFi network searching, thereby the user may search the WiFi network in an area with the WiFi signal coverage at any time without turn on a WiFi function of the terminal equipment at any time, meanwhile power consumption of the terminal equipment is reduced.

## Description

### Technical Field

The present invention relates to a wireless mobile communication technology field, and particularly, to a terminal and method for implementing passively activated WiFi network searching.

### Background of the Related Art

The Wireless Fidelity (WiFi) is the commercial name of a Wireless Local network (Wlan) technology-IEEE 802.11 serials standards. WiFi is a Wireless network composed by Access Points (AP) and wireless network cards, its structure is simple, which can achieve rapidly networking. Nowadays, more and more mobile terminal serial products use WiFi to transfer data; however the WiFi network coverage in many areas still fails in achieving a seamless connection. If the existing terminal device does not turn on a WiFi function, even if it is located in the coverage region of the WiFi network, a user is informed that there is an available network; while the WiFi function is only set to be in an on-state, the user is prompted that there is the available network when a WiFi network coverage has been searched out. It can be seen that, the current mode of searching for the WiFi network depends on whether the WiFi function item is turned on by the user; this mode is of poor operability, and thus it does not facilitate for the user to use the WiFi network.

### Summary of the Invention

The embodiments of the present invention provide a terminal and method for implementing passively activated WiFi network searching, to solve the problem that a mode for WiFi network searching in the related art depends on manually turning on and has a poor operability.

In order to solve the foregoing technical problem, the technical scheme adopted by embodiments of the present invention is as follows.

In one aspect, the embodiments of the present invention provide a method for a terminal implementing passively activated WiFi network searching, comprising:
A terminal configured with a switch device performing a detection on a received signal in real time, and when a WiFi signal is detected, the switch device turning on a WiFi module in a function-off state to search a WiFi network.
Alternatively, the method of the embodiments of the present invention further comprises: when the WiFi module searches for the WiFi network, if an available WiFi network is searched out, then prompting a user to perform a connecting selection; if an available WiFi network is not searched out, then turning off a WiFi function.
Alternatively, in the method of the embodiments of the present invention, a radio-frequency unit in the terminal performs a WiFi signal detection after the terminal receives a signal; and when a WiFi signal is detected, sends the WiFi signal to the switch device, to trigger the switch device to turn on the WiFi module in a function-off state to search for the WiFi network.
Alternatively, in the method of the embodiments of the present invention, the switch device performs a WiFi signal detection after the terminal receives the signal; and when a WiFi signal is detected, turns on the WiFi module in a function-off state to search for the WiFi network; wherein the switch device is a switch device with a frequency response characteristic.

In another aspect, the embodiments of the present invention provide a terminal, comprising: an antenna, a radio-frequency unit, and a WiFi module, and further comprising: a switch device;
wherein the switch device is configured to turn on the WiFi module in a function-off state to search for a WiFi network when a WiFi signal is received.

Alternatively, in the terminal of the embodiments of the present invention, the WiFi module is further configured to: when searching for the WiFi network, prompt a user to perform a connecting selection if an available WiFi network is searched out, and turn off a WiFi function if an available WiFi network is not searched out.

Alternatively, in the terminal of the embodiments of the present invention, the switch device is integrated in the WiFi module, and after the WiFi signal that is detected and sent by the radio-frequency unit is received, the switch device turns on the WiFi module in a function-off state to search for the WiFi network.

Alternatively, in the terminal of the embodiments of the present invention, the switch device is arranged between the radio-frequency unit and the WiFi module; and after the WiFi signal that is detected and sent by the radio-frequency unit is received, the switch device turns on the WiFi module in a function-off state to search for the WiFi network.

Alternatively, in the terminal of the embodiments of the present invention, the switch device is a switch device with a frequency response characteristic, and is arranged between the antenna and the radio-frequency unit, the switch device performs a detection on a signal received by the antenna, and turns on the WiFi module in a function-off state to search for the WiFi network after detecting a WiFi signal.

Alternatively, in the terminal of the embodiments of the present invention, the switch device is an active device or a passive device.

The beneficial effects of the embodiments of the present invention are as follows:
In the method and terminal described in the embodiments of the present invention, a switch device is configured in the terminal, after the switch device receives a WiFi signal, a WiFi module is turned on immediately to search for a network, for the user, it implements a mode for passively activated WiFi network searching, thereby the user may search out the WiFi network in an area with the WiFi signal coverage at any time without turning on a WiFi function of the terminal equipment at any time, meanwhile power consumption of the terminal equipment is reduced.

### Brief Description of Drawings

The accompanying drawings, which require to be used in the embodiments or related technology description, are briefly introduced herein, so as to clearly describe the technical scheme in the embodiments of the present invention or the related technologies; Obviously, the accompanying drawings described below are only some embodiments of the present invention; for a person skilled in the art, other figures can also be obtained according to these accompanying drawings, without expending a creative work.
FIG. 1 is a flow chart of a method for a terminal implementing passively activated WIFI network searching, which is provided by the embodiment of the present invention;
FIG. 2 is a structure diagram of a terminal provided by the embodiment of the present invention;
FIG. 3 is an another structure diagram of a terminal provided by the embodiment of the present invention;
FIG. 4 is further a structure diagram of a terminal provided by the embodiment of the present invention.

### Preferred Embodiments of the Present Invention

The technical scheme in the embodiments of the present invention will be clearly and completely illustrated below in combination with the accompanying figures of the embodiments of the present invention; obviously, the illustrated embodiments are merely a part of the embodiments of the present invention, but not all embodiments. All other embodiments obtained by one skilled in the art without contributing any creative work based on the embodiments in the present invention should belong to the protection scope of the present invention.

To solve the problem that the mode for WiFi network searching in the related art depends on a manual turning on and has a poor operability, the present invention provides a terminal and a method for the terminal implementing passively activated WiFi network searching, so as to facilitate a terminal equipment to search out an available WiFi network without turning on a WiFi function in advance. The implement process of the present invention is herein described in detail through several specific embodiments.

### Method Embodiment

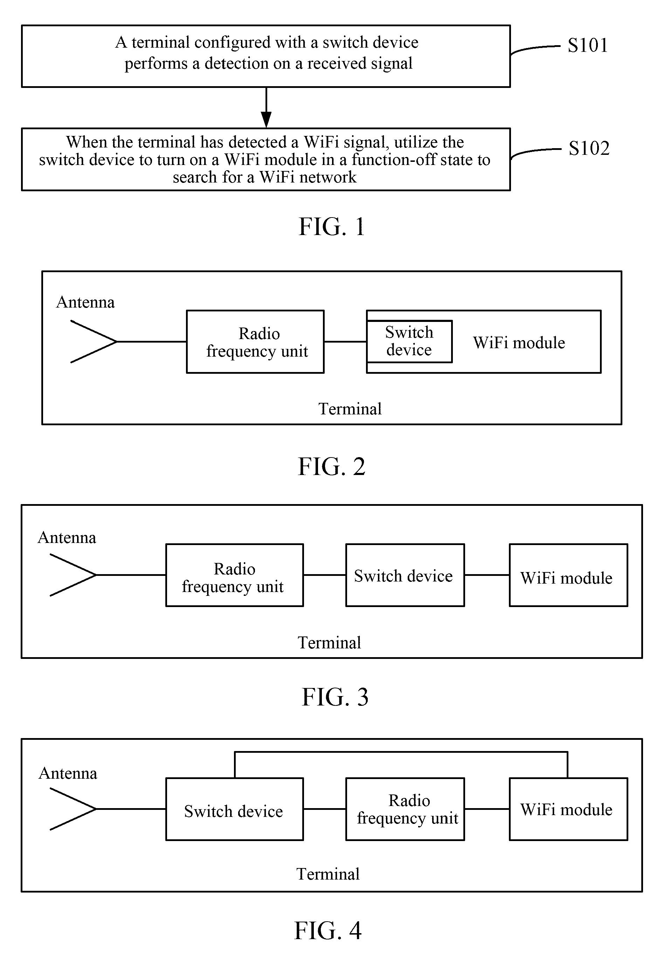

As shown in figure 1, the embodiments of the present invention provide a method for a terminal implementing passively activated WiFi network searching; basic principles of the method are: a switch device is added in an existing terminal equipment; when the terminal equipment moves from an area without WiFi network coverage into an area with WiFi network coverage, and when a WiFi signal sent by an Access Point (AP) is transmitted to the switch device, the switch device can instantly turn on a WiFi module to search for a network. Specifically, the method of the embodiments of the present invention comprises following steps:
In the step S101, a terminal configured with a switch device performs a detection on a received signal;
In the step S102, When the terminal has detected a WiFi signal, it utilizes the switch device to turn on a WiFi module in a function-off state to search for a WiFi network.

To be precise, in foregoing steps, a radio-frequency unit inside the terminal performs the WiFi signal detection after the terminal receives a signal; and when the WiFi signal has been detected, the WiFi signal are sent to the switch device, to trigger the switch device to turn on the WiFi module in a function-off state to search for the WiFi network.

Or, the switch device performs the WiFi signal detection after the terminal receives a signal, and when the WiFi signals has been detected, it turns on the WiFi module in a function-off state to search for a WiFi network; wherein the switch device is a switch device with a frequency response characteristic. In other words, the switch device only responds to the frequency of the WiFi signal.

The method of the present embodiment further comprises: when the WiFi module searches for the WiFi network, if an available WiFi network is searched out, then a user was prompted to perform a connect selection; if an available WiFi network is not searched out, then the WiFi function is turned off.

In summary, in the method of the present embodiment, after the WiFi signal has been received, the switch device may instantly turn on the WiFi module to search for the network, after an available WiFi network has been detected, through a system, the user is prompted that there is an available WiFi network and it is to determine whether to connect the WiFi network; a mode for passively activated WiFi network searching is achieved, and thereby a user can search out the WiFi network in an area with the WiFi signal coverage at any time without turning on the WiFi function of the terminal equipment at any time, meanwhile the power consumption of the terminal equipment can be reduced.

### Device Embodiment

The present embodiment provides a terminal, the terminal can implement passively activated WiFi network searching, the terminal comprises: an antenna for receiving signals, a radio-frequency unit for performing radio-frequency processing on the signals received by the antenna, and a WiFi module for implementing a WiFi network connection, the terminal further comprises a switch device;
the switch device is configured to turn on the WiFi module in a function-off state to search for a WiFi network when receiving a WiFi signal.

The WiFi module is further configured to search for the WiFi network after turning on the WiFi function, prompt a user to perform a connect selection if an available WiFi network is searched out; and turn off the WiFi function if an available WiFi network is not searched out.

Wherein, the deployment mode of the switch device can preferably adopt following modes:
Mode 1, as shown in figure 2, the switch device is integrated in the WiFi module, and when the switch device is integrated in the WiFi module, if receiving the WiFi signal that is detected and sent by the radio-frequency, the switch device turns on the WiFi module in a function-off state to search for the WiFi network.
Mode 2, as shown in figure 3, the switch device is arranged between the radio-frequency unit and the WiFi module; and at this time, if receiving the WiFi signal that is detected and sent by the radio-frequency unit, the switch device turns on the WiFi module in a function-off state to search for the WiFi network.
Mode 3, as shown in figure 4, the switch device is arranged between the antenna and the radio-frequency unit, to perform detection on the signals received by the antenna; and after detecting a WiFi signal, the switch device turns on the WiFi module in a function-off state to search for the WiFi network. Wherein, the switch device is preferably a switch device with a frequency response characteristic, which is used to merely respond to a WiFi frequency band supported by the terminal equipment.

The switch device may be an active device or a passive device in the embodiments of the present invention. Which mode is specifically adopted can be determined by the work load of the switch device, in other words, if the received signals (generally electromagnetic signals) can support the work load of the switch device, then the passive mode is adopted; if the received signals cannot support the work load of the switch device, then the active mode is adopted, i.e., a power supply module is needed to supply power.

In summary, in the terminal of the present embodiment, after receiving a WiFi signal, a switch device may instantly turn on a WiFi module to search for a network, after an available WiFi network has been detected, through a system, the user is prompted that there is an available WiFi network and it is to determine whether to connect the WiFi network; a mode for passively activated WiFi network searching is achieved, and thereby a user can search out the WiFi network in an area with the WiFi signal coverage at any time without turning on the WiFi function of the terminal equipment at any time, meanwhile the power consumption of the terminal equipment can be reduced.

Obviously, a person skilled in the art can make a variety of modifications and changes to the embodiments of the present invention without departing from the spirit and scope of the present invention. In this case, supposing these modifications and changes in the embodiments of the present application belong to the scope of the claims and embodiments of the present application and equality technology thereof, the embodiments of the present invention are also intended to comprise these modifications and changes.

### Industrial Applicability

In the method and terminal described in the embodiments of the present invention, a switch device is configured in the terminal, after the switch device receives a WiFi signal, a WiFi module is turned on immediately to search for a network, for the user, it implements a mode for passively activated WiFi network searching, thereby the user may search out the WiFi network in an area with the WiFi signal coverage at any time without turning on a WiFi function of the terminal equipment at any time, meanwhile power consumption of the terminal equipment is reduced.

## Claims

1. A method for a terminal implementing passively activated WiFi network searching, comprising:
the terminal configured with a switch device performing a detection on a received signal; and using the switch device to turn on a WiFi module in a function-off state to search for a WiFi network when a WiFi signal is detected.

2. The method according to claim 1, further comprising:
when the WiFi module searches for the WiFi network, if an available WiFi network is searched out, prompting a user to perform a connecting selection; if an available WiFi network is not searched out, then turning off a WiFi function.

3. The method according to claim 1 or 2, wherein, a radio-frequency unit in the terminal performs a WiFi signal detection after the terminal receives a signal, and when a WiFi signal is detected, sends the WiFi signal to the switch device, to trigger the switch device to turn on the WiFi module in a function-off state to search for the WiFi network.

4. The method according to claim 1 or 2, wherein, the switch device performs a WiFi signal detection after the terminal receives a signal, and when a WiFi signal is detected, turns on the WiFi module in a function-off state to search for the WiFi network; wherein the switch device is a switch device with a frequency response characteristic.

5. A terminal, comprising: an antenna, a radio-frequency unit, and a WiFi module, and further comprising: a switch device; wherein
the switch device is configured to turn on the WiFi module in a function-off state to search for a WiFi network when receiving a WiFi signal.

6. The terminal according to claim 5, wherein the WiFi module is further configured to:
when searching for the WiFi network, prompt a user to perform a connect selection if an available WiFi network is searched out, and turn off a WiFi function if an available WiFi network is not searched out.

7. The terminal according to claim 5, wherein the switch device is integrated in the WiFi module, the switch device turns on the WiFi module in a function-off state to search for the WiFi network after receiving the WiFi signal which is detected and sent by the radio-frequency unit.

8. The terminal according to claim 5, wherein the switch device is arranged between the radio-frequency unit and the WiFi module, and the switch device turns on the WiFi module in a function-off state to search for the WiFi network after receiving the WiFi signal which is detected and sent by the radio-frequency unit.

9. The terminal according to claim 5, wherein the switch device is a switch device with a frequency response characteristic, and is arranged between the antenna and the radio-frequency unit, the switch device performs a detection on a signal received by the antenna, and turns on the WiFi module in a function-off state to search for the WiFi network after detecting a WiFi signal.

10. The terminal according to any one of claims 5-9, wherein the switch device is an active device or a passive device.
